**Europäisches Patentamt**

**European Patent Office**

**Office européen des brevets**

(19)

(11) Veröffentlichungsnummer: **0 004 972**
**B1**

(12) **EUROPÄISCHE PATENTSCHRIFT**

(45) Veröffentlichungstag der Patentschrift:
06.01.82

(51) Int. Cl.³: **H 04 B 3/48**, H 04 B 3/10

(21) Anmeldenummer: **79101179.4**

(22) Anmeldetag: **18.04.79**

(54) **Verfahren und Einrichtung zur Streckenmessung in elektrischen Nachrichtenübertragungssystemen.**

(30) Priorität: **21.04.78 DE 2817646**

(43) Veröffentlichungstag der Anmeldung:
**31.10.79 Patentblatt 79/22**

(45) Bekanntmachung des Hinweises auf die Patenterteilung:
**06.01.82 Patentblatt 82/1**

(84) Benannte Vertragsstaaten:
**BE FR GB IT NL SE**

(56) Entgegenhaltungen:
**DE-A-1 591 814**
**DE-A-2 613 054**
**DE-B-1 130 002**
**FR-A-2 153 007**
**FR-A-2 219 581**

(73) Patentinhaber: **SIEMENS AKTIENGESELLSCHAFT Berlin und München, Postfach 22 02 61, D-8000 München 22 (DE)**

(72) Erfinder: **Fink, Helmuth, Wiesentfelserstrasse 74, D-8000 München 60 (DE)**
Erfinder: **Van der Gucht, Karel, Sauerlacherstrasse 70, D-8024 Deisenhofen (DE)**

## Verfahren und Einrichtung zur Streckenmessung in elektrischen Nachrichtenübertragungssystemen

Die Erfindung betrifft ein Verfahren zur Streckenmessung in elektrischen Nachrichtenübertragungssystemen, bei dem sendeseitig aufeinanderfolgend nach einem vorgegebenen Zeitprogramm Meßsignale mit frequenzmäßig unterschiedlichen Einzelfrequenzen erzeugt und der Übertragungsstrecke zugeführt werden und bei dem empfangsseitig nach dem gleichen Zeitprogramm aufeinanderfolgend Messungen bei den verschiedenen Einzelfrequenzen durchgeführt werden, wobei empfangsseitig durch Ausfilterung der Zeitpunkt des Auftretens mindestens einer ausgewählten Einzelfrequenz (Startfrequenz) bestimmt und von diesem Zeitpunkt an das empfangsseitige Zeitprogramm gestartet wird.

Ein Verfahren dieser Art ist aus der FR-A-2 219 518 und der DE-OS 1 591 814 bekannt. Offen bleibt bei dem bekannten Verfahren die Frage, wie die in den jeweiligen Systemen vorhandenen Pilotsignale zu behandeln sind. Einerseits darf bei der Messung nicht ein zusätzliches, mit einer Systempilotfrequenz zusammenfallendes oder stark angenähertes Signal erzeugt werden, weil sonst Störungen durch die Überlagerung auftreten würden. Andererseits fehlen dann bei der Messung eine Reihe von Meßpunkten und zwar gerade bei kritischen Frequenzwerten.

Aufgabe der Erfindung ist es, bei einem Verfahren der eingangs genannten Art möglichst viele Meßpunkte auch im Bereich der Systempilote zu erhalten, ohne daß dabei Störungen auftreten. Gemäß der Erfindung wird dies dadurch erreicht, daß zur Einbeziehung von Systempiloten in den Meßvorgang für die jeweiligen Systempilotfrequenzen sendeseitig im jeweiligen Ablaufprogramm kein Meßsignal vom Pegelsender auf die Strecke gegeben wird, daß empfangsseitig der jeweilige Pegelwert des/der auf der Strecke vorhandenen Systempiloten als ein Meßpunkt innerhalb der Meßreihe gemessen und zur Auswertung zusätzlich herangezogen wird.

Auf diese Weise stehen auch bei den Frequenzen der Systempilote empfangsseitig Meßwerte zur Verfügung. Da vom Meßsender jedoch an dieser Stelle keine Sendesignale ausgesandt werden, sind Störungen der vorhandenen Systempilote vermieden, wobei zugleich in den sendeseitigen Lücken empfangsseitig die Messung durchgeführt wird. Die Einbeziehung der Systempilote in diese Messung hat auch noch den besonderen Vorteil, daß beim Entzerrerabgleich mit eingeschalteten Systempiloten gearbeitet werden kann und zusätzlich deren Meßwerte mit erfaßt werden.

Die Erfindung betrifft weiterhin eine Einrichtung zur Durchführung des Verfahrens zur Streckenmessung, bei der in einem Meßsender und in den Meßempfängern jeweils eine Ablaufsteuerung mit dem gleichen, in einem Programmspeicher enthaltenen Zeitprogramm für die Bereitstellung und Aussendung der Einzelfrequenzen vorgesehen ist und die Meßempfänger jeweils eine Filterschaltung für die Ausfilterung einer oder mehrerer Einzelfrequenzen aufweisen, durch die der Zeitpunkt des Auftretens dieser ausgewählten Einzelfrequenz(en) bestimmt und als Startsignal zu einer empfangsseitigen Ablaufsteuerung übertragen wird.

Gemäß einer ersten Ausführungsform ist diese Einrichtung dadurch gekennzeichnet, daß der Meßsender für die Erzeugung aller Frequenzen einschließlich der Systempilotfrequenzen ausgelegt ist und daß diese vor der Aussendung durch einen Schalter unterdrückt werden, und daß der Meßempfänger auch für den Empfang und die Auswertung der Systempilotfrequenzen ausgelegt ist.

Eine weitere Ausführungsform der Einrichtung ist dadurch gekennzeichnet, daß der Meßsender nur für die Erzeugung der nicht mit Systempilotfrequenzen zusammenfallenden Meßsignale ausgelegt ist und während der Messung mit den Systempilotfrequenzen Pausen im Sendesignal auftreten und daß der Meßempfänger auch für den Empfang und die Auswertung der Systempilotfrequenzen ausgelegt ist.

Weiterbildungen der Erfindung sind in den Unteransprüchen wiedergegeben.

Die Erfindung sowie ihre Weiterbildungen werden nachfolgend anhand von Zeichnungen näher erläutert. Es zeigt

Fig. 1 einen Meßsender und einen Meßempfänger für die Durchführung eines Verfahrens zu Streckenmessung,

Fig. 2 ein Zeitdiagramm für eine Folge der Einzelfrequenzen,

Fig. 3 einen Frequenzplan für eine erfindungsgemäße Übertragungsstrecke mit festgelegten Pilotfrequenzen.

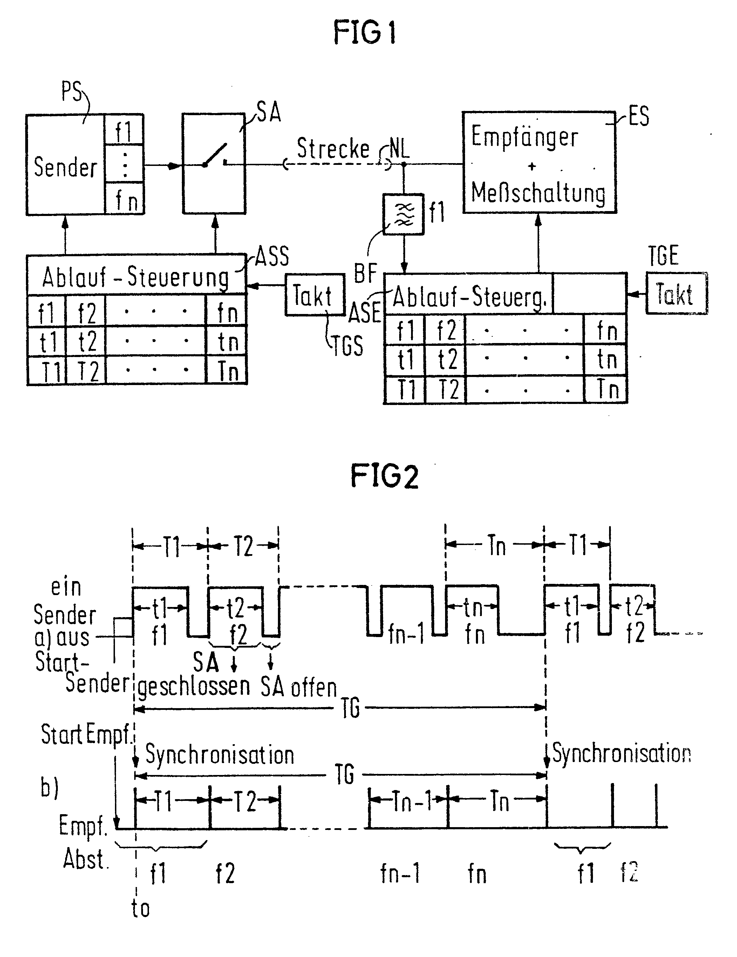

In Fig. 1 ist der Meßsender mit PS bezeichnet, wobei vorausgesetzt ist, daß dieser Meßsender eine bestimmte Anzahl von Einzelfrequenzen f1 bis fn erzeugen kann. Die Bereitstellung derartiger Einzelfrequenzen kann vorteilhaft durch einen Systhesizer erfolgen. Zur Festlegung derjenigen Frequenz aus dem Bereich f1 bis fn, die gerade ausgesandt werden soll, ist eine eigene Ablaufsteuerung ASS vorgesehen, in der nicht nur die Frequenzwerte f1 bis fn, sondern auch die Dauer t1 bis tn dieser Meßsignale und der Zeitabstand T1 bis Tn zwischen aufeinanderfolgenden Meßsignalen in einem Programmspeicher festgehalten sind. Zur genauen zeitlichen Festlegung der einzelnen Steuervorgänge der Ablaufsteuerung ASS ist ein Taktgeber TGS vorgesehen, dessen Taktfrequenz zur Erzielung einer hohen Zeitgenauigkeit möglichst hoch gewählt wird. Die Bereitstellung der jeweiligen Einzelfrequenzen f1 bis fn, welche als Meßsignale der Übertragungsstrecke NL zugeführt werden sollen, erfolgt mit einem vorgegebenen, vorzugsweise konstanten Pegel. Auf diese Weise kann empfangsseitig die Dämpfungsverzerrung durch die Übertragungsstrecke NL gemessen werden. Diese Messungen werden bevorzugt für den Abgleich von Entzerrern, insbesondere Echo- oder Buckelentzerrern benötigt. Weiterhin sind empfangsseitig Phasenmessungen zur Bestimmung z. B. der Gruppenlaufzeitverzerrung oder von Phasenjitter durchführbar. Die Zeitdauer t1 bis tn, mit welcher eine Einzelfrequenz f1 bis fn auf die Übertragungsstrecke NL gegeben wird, ist durch einen Schalter SA festgelegt, welcher am Ausgang des Pegelsenders PS angeordnet ist und der von der Ablaufsteuerung ASS geöffnet bzw. geschlossen wird. Um zu vermeiden, daß Störungen in durch Informationsübertragungen belegten Übertragungskanälen auftreten, ist es zweckmäßig, die Tastung der einzelnen Frequenzen f1 bis fn »weich« vorzunehmen, d. h. mit entsprechend langsam ansteigender und abfallender Flanke.

Auf der Empfangsseite ist ein Empfänger ES mit einer entsprechenden Meßschaltung (z. B. Pegel- und/oder Phasenmesser) vorgesehen, der beispielsweise ähnlich dem in der DE-OS 2 613 054 beschriebenen Meßempfänger aufgebaut sein kann. Durch ein Bandfilter BF wird vom Eingang des Emfpängers eine der Einzelfrequenzen abgezweigt (während die übrigen unterdrückt werden) und der empfangsseitigen ebenfalls einen Programmspeicher enthaltenden Ablaufsteuerung ASE zugeleitet. Bevorzugt wird ein selektiver Empfänger verwendet, welcher schmalbandig auf das jeweilige Empfangssignal abgestimmt wird. In diesem Fall ist das Bandfilter BF bereits im Empfänger aufgrund der dort vorgenomenen Schmalbandabstimmung vorhanden und braucht nicht eigens bereitgestellt werden. Hierbei wird der selektive Zweig des Empfängers direkt mit der Ablaufsteuerung ASE verbunden.

Es ist zweckmäßig, die erste der Einzelfrequenzen, also nach dem vorliegenden Beispiel die Frequenz f1 als Startfrequenz auszufiltern, weil dann bereits bei Beginn einer Meßperiode TG die Synchronisation zwischen dem Pegelsender PS und dem Empfänger ES durchgeführt werden kann.

Mehrere parallelgeschaltete Bandfilter BF (oder mehrfache Abstimmungen bei selektiven Empfängern) für verschiedene Frequenzen fx können dann vorgesehen werden, wenn sichergestellt werden soll, daß während des Meßvorganges nochmals eine zeitliche Nachsynchronisation durchgeführt werden soll. Beispielsweise könnte bei Ausfilterung der Einzelfrequenz f5 der Zeitpunkt, in dem die Frequenz f5 auftritt, nochmals genauer festgestellt und gegebenenfalls gegenüber der Messung der Einzelfrequenz f1 korrigiert werden. Dieser Weg ist auch dann vorteilhaft, wenn die erste Startfrequenz (f1) belegt oder gestört ist bzw. ausfällt.

Die Ablaufsteuerung ASE hat einen Taktgeber TGE, der zweckmäßig mit der gleichen Taktfrequenz arbeitet, wie der Taktgeber TGS auf der Sendeseite. Weiterhin ist bei der empfangsseitigen Ablaufsteuerung ASE die gleiche Verteilung der Einzelfrequenzen f1 bis fn, die Verteilung der Dauer der Einzelimpulse t1 bis tn und der Zeitabstand T1 bis Tn gespeichert. Die Zeitprogramme in den beiden Ablaufsteuerungen ASS und ASE sind somit völlig identisch, wobei bei Änderung des Meßbetriebes z. B. bei Messung auf einer anderen Übertragungsstrecke NL lediglich diese Zeitprogramme sende- und empfangsseitig geändert werden müssen, um in einfacher Weise eine Anpassung an die Gegebenheiten der jeweiligen Strecke zu erreichen.

Die Einzelheiten der Synchronisation lassen sich aus den Zeitplänen nach Fig. 2 entnehmen, bei denen in Zeile a die Aufeinanderfolge der Einzelfrequenzen f1 bis fn auf der Sendeseite dargestellt ist. Der Sender wird zum Zeitpunkt t0 gestartet. Durch den Schalter SA wird ein Sendeimpuls für eine bestimmte Dauer t1 durchgelassen. Dieser erste Sendeimpuls hat eine Trägerfrequenz f1 und bildet somit die ertste Einzelfrequenz zur Messung der Strecke NL nach Fig. 1. Nach einer kurzen Pause wird ein zweiter Sendeimpuls bereitgestellt, dessen Frequenz f2, dessen Zeitdauer t2 beträgt. Der zeitliche Abstand zwischen der Vorderflanke des ersten Sendeimpulses und der Vorderflanke des zweiten Sendeimpulses ist mit T1 bezeichnet. Es ist besonders einfach, die einzelnen Zeiten tx und Tx für jede der n Einzelfrequenzen möglichst gleich zu halten, wie dies auch in Fig. 2 dargestellt ist. Es kann aber auch vorteilhaft sein, z. B. zum Ausgleich sehr starker Dämpfungsverzerrungen und zur Erzielung einer höheren Meßgenauigkeit die verschiedenen Frequenzen f1 bis fn unterschiedlich lang an die Übertragungsstrecke abzugeben und damit auf der Empfangsseite eine entsprechend unterschiedliche Meßzeit zur Verfügung zu stellen. Bei dem letzten Sendeimpuls mit der Einzelfrequenz fn ist die Zeitdauer Tn zweckmäßig gegenüber den anderen Zeitdauern der vorangegangenen Einzelfrequenzen etwas größer gewählt, weil mit der nachfolgenden Einzelfrequenz f1 der nächsten Meßperiode eine neue Synchronisation der Empfangsseite über das Bandfilter BF1 durchgeführt werden muß. Bis alle Einzelfrequenzen f1 bis fn ausgesandt sind und bevor wieder mit der nächsten Einzelfrequenz f1 begonnen wird, ist die Periodenzeit TG vergangen. Nach Abschluß einer Meßperiode wird der Meßempfänger ES von der Ablaufsteuerung ASE in Wartestellung gehalten bis in der nächsten Meßperiode wieder die Startfrequenz f1 eintrifft usw. Dabei ist der Empfänger auf die Startfrequenz f1 abgestimmt.

In der in Zeile b) darunter dargestellten Zeitverteilung ist angedeutet, wie empfangsseitig die Synchronisation verläuft. Da der erste Impuls, der von dem Pegelsender PS ausgesandt wird, die Einzelfrequenz f1 hat, trifft dieses erste Signal nach einer bestimmten (meist vernachlässigbaren) Laufzeit auf der Empfangsseite ein. In diesem Moment wird mit der Aktivierung des Bandfilters BF1 bzw. des selektiven Meßempfängers die Ablaufsteuerung ASE in Tätigkeit gesetzt und dort die Zeit t1 und T1 bereitgestellt. In dieser Zeit t1 bzw. T1 bestimmt der Meßempfänger den Pegel bzw. die Phase, mit dem bzw. der die Einzelfrequenz f1 eintrifft und der gemessene Wert wird in einer Speichereinrichtung zusammen mit dem entsprechenden Frequenzkennzeichen f1 abgespeichert. Um den Einfluß von Einschwingvorgängen gering zu halten, wird vorteilhaft gegen Ende der jeweiligen Anschaltzeit (z. B. t1) gemessen. Nach Ablauf der Zeit T1 erfolgt automatisch durch die Taktsteuerung TGE der Ablaufsteuerung ASE die Umschaltung auf f2, d. h. der Empfänger ES bestimmt in der Zeit t2 einen neuen Meßwert, der mit der Frequenz f2 verknüpft in einer entsprechenden Speichereinrichtung abgespeichert wird usw. Dieser Vorgang läuft durch, bis mit der letzten Einzelfrequenz fn in der Zeit tn der gesamte interessierende Frequenzbereich abgetastet ist und somit im Empfänger ES n Meßpunkte für den Pegel und/oder die Phase vorliegen. Nach Ablauf der Zeit TG also einer vollen Meßperiode mit allen Einzelfrequenzen wird die Ablaufsteuerung ASE in Wartestellung (ein selektiver Empfänger ES ist dabei abgestimmt auf die Startfrequenz z. B. f1) versetzt, und zwar so lange, bis erneut ein Signal mit der Frequenz f1 beim Bandfilter BF auftritt. Dieses Signal bewirkt den erneuten Durchlauf der verschiedenen Meßvorgänge und deren Zuordnung, wobei zweckmäßig mit dem gleichen Zeitprogramm gearbeitet wird, wie beim ersten Durchlauf. Es folgen somit stets Zeiten der Wartestellung (zwischen fn und f1) und Zeiten des automatischen Ablaufs (zwischen f1 und fn) aufeinander.

Da beide Zeitprogramme auf der Sende- und Empfangsseite völlig gleich ausgelegt sind, ergibt sich durch dieses Verfahren in einfacher Weise eine sichere und eindeutige Synchronisation zwischen Sende- und Empfangsseite. Fällt einer der Impulse, z. B. mit der Einzelfrequenz f2 aus, so wird zwar beim Empfänger ES an dieser Stelle kein Pegelwert gemessen (weil der Sendeimpuls mit der Frequenz f2 auf der Empfangsseite nicht angekommen ist). Dagegen sind alle anderen Meßwerte f1 und f3 bis fn richtig und geben in der Zuordnung zwischen Frequenzwert einerseits und Amplituden- und/oder Phasenwert andererseits die Verhältnisse zutreffend wieder.

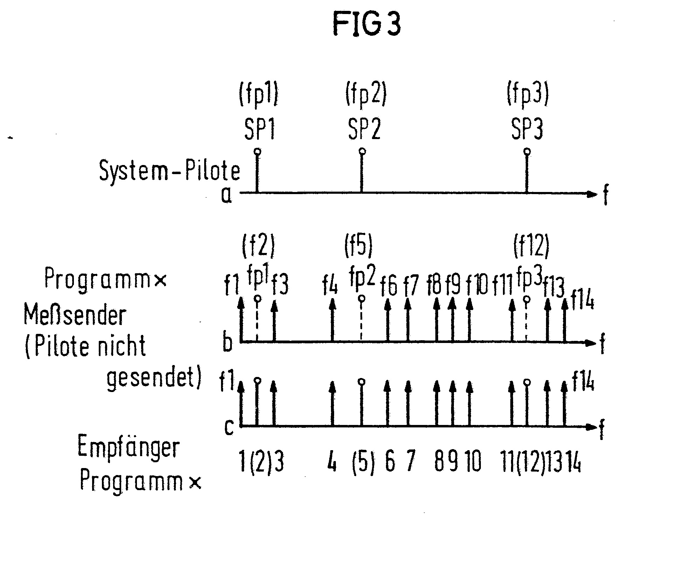

Bei dem Frequenzplan nach Fig. 3 ist angenommen, daß eine Übertragungsstrecke drei Systempilote SP1, SP2 und SP3 aufweist. Diese Pilote werden in die Messung mit einbezogen, indem ihnen empfangsseitig ebenfalls eine entsprechende Meßzeit zur Verfügung gestellt wird. Der Meßsender erzeugt zweckmäßig in diesem Fall alle Frequenzen f1 bis fn, also im vorliegenden Beispiel insgesamt 14. Dagegen wird sichergestellt, daß im Bereich der Pilotfrequenzen fp1, fp2 und fp3 die zugehörigen Einzelfrequenzen f2, f5 und f12 unterdrückt werden. Hierzu wird zweckmäßig ebenfalls der Schalter SA benutzt, der in der fraglichen Zeit z. B. T2 geöffnet bleibt. Empfangsseitig wird durch den selektiven Meßempfänger jedoch auch bei den Pilotfrequenzen fp1, fp2 und fp3 gemessen und damit die vollständige Zahl von z. B. 14 Meßpunkten bereitgestellt. Die Einbeziehung der Systempilote in diese Messung hat den besonderen Vorteil, daß beim Entzerrerabgleich mit eingeschalteten Systempiloten gearbeitet werden kann und zusätzlich deren Meßwerte mit erfaßt werden.

In diesen Fällen wird von der Erzeugung von mit den Pilotfrequenzen fp1, fp2 und fp3 zusammenfallenden Einzelfrequenzen f2, f5, f12 im Meßsender ganz abgesehen, wodurch eine Ausblendung dieser Einzelfrequenzen durch den Schalter SA überflüssig wird. Der Sender PS stellt somit in der Zeit T2, T5 und T12 keine Sendesignale bereit (längere Pausen). Empfangsseitig wird aber trotzdem auf f2, f5 und f12 abgestimmt, wobei Pilotfrequenzen fp1, fp2, fp3 empfangen werden.

Die Einzelfrequenzen f1 bis fn brauchen nicht fortlaufend aufsteigende Frequenzen darstellen. Es kann sich auch um absteigende oder gemischt auf- und absteigende Frequenzen handeln.

Als Startfrequenz sollte keine systemeigene Pilotfrequenz verwendet werden, weil hier der Zeitpunkt des Auftretens (bei eingeschaltetem Übertragungssystem) nicht frei wählbar ist.

**Patentansprüche**

1. Verfahren zur Streckenmessung in elektrischen Nachrichtenübertragungssystemen, bei dem sendeseitig aufeinanderfolgend nach einem vorgegebenen Zeitprogramm Meßsignale mit frequenzmäßig unterschiedlichen Einzelfrequenzen erzeugt und der Übertragungstrecke zugeführt werden und bei dem empfangsseitig nach dem gleichen Zeitprogramm aufeinanderfolgend Messungen bei den verschiedenen Einzelfrequenzen durchgeführt werden, wobei empfangsseitig durch Ausfilterung der Zeitpunkt des Auftretens mindestens einer ausgewählten Einzelfrequenz (Startfrequenz) bestimmt und von diesem Zeitpunkt an das empfangsseitige Zeitprogramm gestartet wird, dadurch gekennzeichnet, daß zur Einbeziehung von Systempiloten (SP1, SP2, SP3) in den Meßvorgang für die jeweiligen Systempilotfrequenzen (fp1, fp2, fp3) sendeseitig im jeweiligen Ablaufprogramm kein Meßsignal vom Pegelsender auf die Strecke gegeben wird, daß empfangsseitig der jeweilige Pegelwert des/der auf der Strecke vorhandenen Systempiloten (SP1, SP2, SP3) als ein Meßpunkt innerhalb der Meßreihe gemessen und zur Auswertung zusätzlich herangezogen wird.

2. Verfahren nach Anspruch 1, dadurch gekennzeichnet, daß die Tastung der Einzelfrequenzen (f1 bis fn) mit langsam ansteigenden und abfallenden Flanken (»Weichtastung«) erfolgt.

3. Verfahren nach einem der vorhergehenden Ansprüche, dadurch gekennzeichnet, daß nach Ablauf einer Meßperiode der Meßempfänger (ES) in Wartestellung gehalten wird und dabei auf die Startfrequenz (f1) abgestimmt ist.

4. Verfahren nach einem der vorhergehenden Ansprüche, dadurch gekennzeichnet, daß empfangsseitig gegen Ende der jeweiligen Anschaltzeit (z. B. t1) gemessen wird.

5. Verfahren nach einem der vorhergehenden Ansprüche, dadurch gekennzeichnet, daß als Startfrequenz (z. B. f1) eine außerhalb der Pilotfrequenz(en) liegende Frequenz gewählt ist.

6. Einrichtung zur Durchführung des Verfahrens zur Streckenmessung nach einem der vorhergehenden Ansprüche, bei der in einem Meßsender und in den Meßempfängern jeweils eine Ablaufsteuerung mit dem gleichen, in einem Programmspeicher enthaltenen Zeitprogramm für die Bereitstellung und Aussendung der Einzelfrequenzen vorgesehen ist und die Meßempfänger jeweils eine Filterschaltung für die Ausfilterung einer oder mehrerer Einzelfrequenzen aufweisen, durch die der Zeitpunkt des Auftretens dieser ausgewählten Einzelfrequenz(en) bestimmt und als Startsignal zu einer empfangsseitigen Ablaufsteuerung übertragen wird, dadurch gekennzeichnet, daß der Meßsender (PS) für die Erzeugung aller Frequenzen (f1 bis fn) einschließlich der Systempilotfrequenzen (fp1, fp2, fp3) ausgelegt ist und diese vor der Aussendung durch einen Schalter (SA) unterdrückt werden, und daß der Meßempfänger (ES) auch für den Empfang und die Auswertung der Systempilotfrequenzen (fp1, fp2, fp3) ausgelegt ist.

7. Einrichtung zur Durchführung des Verfahrens zur Streckenmessung nach einem der Ansprüche 1 bis 5, bei der in einem Meßsender und in den Meßempfängern jeweils eine Ablaufsteuerung mit dem gleichen, in einem Programmspeicher enthaltenen Zeitprogramm für die Bereitstellung und Aussendung der Einzelfrequenzen vorgesehen ist und die Meßempfänger jeweils eine Filterschaltung für die Ausfilterung einer oder mehrerer Einzelfrequenzen aufweisen, durch die der Zeitpunkt des Auftretens dieser ausgewählten Einzelfrequenz(en) bestimmt und als Startsignal zu einer empfangsseitigen Ablaufsteuerung übertragen wird, dadurch gekennzeichnet, daß der Meßsender (PS) nur für die Erzeugung der nicht mit Systempilotfrequenzen (fp1, fp2, fp3) zusammenfallenden Meßsignale ausgelegt ist und während der Messung mit den Systempilotfrequenzen (fp1, fp2, fp3) Pausen im Sendesignal auftreten und daß der Meßempfänger (ES) auch für den Empfang und die Auswertung der Systempilotfrequenzen (fp1, fp2, fp3) ausgelegt ist.

**Claims**

1. Method of measuring links in electrical communications transmission systems wherein, at the transmitting end in succession and in accordance with a predetermined time programme, measuring signals are produced with different individual frequencies and are conducted to the transmission link, and wherein at the receiving end in succession and in accordance with the same time programme, measurements are carried out at the various individual frequencies, wherein at the receiving end by means of a filtering process the time of the occurrence of at least one selected individual frequency (start frequency) is determined, and the receiving end time programme is started from this time, characterised in that in order to include system pilots (SP1, SP2, SP3) into the measuring process for the relevant system pilot frequencies (fp1, fp2, fp3), at the transmitting end in the relevant flow programme no measuring signal is supplied by the level transmitter to the link, that at the receiving end the particular level value of the system pilot or pilots existing on the link (SP1, SP2, SP3) is measured as a measurement point within the measurement series and is additionally used for analysis purposes.

2. Method as claimed in Claim 1, characterised in that the keying of the individual frequencies (f1 to fn) takes place wiht slowly rising and falling flanks (»soft keying«).

3. Method as claimed in one of the preceding Claims, characterised in that at the end of a measurement period the measuring receiver (ES) is maintained in the standly state and is tuned to the start frequency (f1).

4. Method as claimed in one of the preceding Claims, characterised in that at the receiving end measurement is carried out towards the end of the respective connection period (e. g. t1).

5. Method as claimed in one of the preceding Claims, characterised in that a frequency located outside of the pilot frequency (frequencies) is selected by way of start frequency (e. g. f1).

6. Device for implementing the method of link measurement as claimed in one of the preceding Claims wherein a measuring transmitter and the measuring receivers are each provided with a flow control having the same time programme, contained in a programme store, for the preparation and emission of the individual frequencies, and the measuring reveivers each comprise a filter circuit which serves to filter out one or more than one individual frequency by which the time of the occurrence of this selected individual frequency/frequencies is determined and is transmitted as start signal to a receiving end flow control unit, characterised in that the measuring transmitter (PS) is designed to produce all the frequencies (f1 to fn) including the system pilot frequencies (fp1, fp2, fp3) an prior to transmission these are suppressed by a switch (SA), and that the measuring receiver (ES) is likewise designed to receive and analyse the system pilot frequencies (fp1, fp2, fp3).

7. Device for the implementation of the method of link measurement as claimed in one of the Claims 1 to 5 wherein a measuring transmitter and the measuring receivers are each provided with a flow control having the same time programme, contained in a programme store, for the preparation and emission of the individual frequencies, and the measuring receivers each comprise a filter circuit which serves to filter out one or more than one individual frequency by merans of which the time of the occurrence of this/these selected frequency/frequencies is determined and is transmitted, as start signal, to a receiving end flow control unit, characterised in that the measuring transmitter (PS) is designed only to produce the measuring signals which do not coincide with system pilot frequencies (fp1, fp2, fp3) and during the measurement with the system pilot frequencies (fp1, fp2, fp3) pauses occur in the transmitted signal, and that the measuring receiver (ES) is also designed to receive and analyse the system pilot frequencies (fp1, fp2, fp3).

**Revendications**

1. Procédé pour la mesure de voies dans des systèmes électriques de la transmission d'informations, du type dans lequel on produit, du côté émission, successivement et selon un programme temporel donné à l'avance, des signaux de mesure à fréquences individuelles différentes que l'on applique à la voie de transmission et dans lequel on réalise, du côté réception et selon le même programme temporel, successivement des mesures aux mêmes fréquences individuelles, l'instant de l'apparition d'au moins une fréquence individuelle sélectionnée étant déterminépar filtrage du côté reception et le programme temporel du côté réception étant démarré à partir de cet instant, caractérisé par le fait que pour inclure des pilotes (SP1, SP2, SP3) du système dans le processus de mesure pour les fréquences pilotes concernées du système (fp1, fp2, fp3) on n'émet pas du côté émission dans le programme de déroulement concerné, un signal de mesure de l'émetteur de niveau à la voie et que du côté réception, la valeur du niveau du ou des pilotes du système (SP1, SP2, SP3) qui sont présents sur la voie est mesurée, en tant que point de mesure, dans la série de mesures et est, en plus, utilisée pour l'évaluation.

2. Procédé selon la revendication 1, caractérisé par le fait que la manipulation des fréquences individuelles (f1 à fn) est opérée avec des flancs croissant et décroissant lentement.

3. Procédé selon l'une des revendications précédentes, caractérisé par le fait qu'après écoulement de la période de mesure, le récepteur de mesure (ES) est maintenu en position d'attente et est accordé à la fréquence de démarrage (f1).

4. Procédé selon l'une des revendications précédentes, caractérisé par le fait que du côté réception, on procède à la mesure vers la fin du temps de branchement concerné (par exemple t1).

5. Procédé selon l'une des revendications précédentes, caractérisé par le fait que l'on choisit comme fréquence de démarrage (par exemple f1) une fréquence qui se situe en dehors de la ou des fréquences pilotes.

6. Installation pour la mise en oeuvre du procédé pour la mesure de voies selon l'une des revendications précédentes, dans laquelle il est prévu dans un émetteur de mesure et dans les récepteurs de mesure respectivement une commande de déroulement, avec le même programme temporel contenu dans une mémoire de programme, pour la mise en position d'attente et l'émission des fréquences individuelles et dans laquelle les récepteurs de mesure comportent, chacun, un circuit-filtre pour filtrer une ou plusieurs fréquences individuelles à l'aide desquelles est déterminée l'apparition de cette (ou de ces) fréquences individuelles sélectionnées qui est transmise, en tant que signal de démarrage, à une commande de déroulement située du côté réception, caractérisée par le fait que l'émetteur d'émission (PS) est réalisé pour produire toutes les fréquences (f1 à fn), y compris les fréquences pilotes (fp1, fp2, fp3) du système, et que celles-ci sont supprimées, avant l'émission, par un commutateur (SA) et que le récepteur de mesure (ES) est réalisé également pour la réception et l'évaluation des fréquences pilotes (fp1, fp2, fp3) du système.

7. Installation pour la mise en oeuvre du procédé pour la mesure de voies selon l'une des revendications 1à 5, dans laquelle il est prévu dans un émetteur de mesure et dans les récepteurs de mesure respectivement une commande de déroulement, avec le même programme temporel contenu dans une mémoire de programmes, pour la mise en position d'attente et l'émission des fréquences individuelles et dans laquelle les récepteurs de mesure comporte, chacun, un circuit-filtre pour filtrer une ou plusieurs fréquences individuelles à l'aide desquelles est déterminée l'apparition de cette (ou de ces) fréquences individuelles sélectionnées qui est transmise, en tant que signal de démarrage, à une commande de déroulement située du côté réception, caractérisée par le fait que l'émetteur de mesure est réalisé uniquement pour produire les signaux de mesure qui ne coïncident pas avec les fréquences pilotes (fp1, fp2, fp3) du système, des intervalles se présentant dans le signal d'émission pendant la mesure avec les fréquences pilotes (fp1, fp2, fp3) du système, et que le récepteur de mesure (ES) est réalisé également pour la réception et l'évaluation des fréquences pilotes (fp1, fp2, fp3) du système.

# FIG 1

# FIG 2

# FIG 3